# EUROPEAN PATENT APPLICATION

(11) **EP 4 628 638 A1**
(43) Date of publication of application: **08.10.2025**
(21) Application number: 23914907.3
(22) Date of filing: 05.10.2023
(51) Int. Cl.: D04H 1/04, D04H 1/728, B01D 39/08

(54) **FILTER MANUFACTURING APPARATUS AND MANUFACTURING METHOD**

(30) Priority: 04.01.2023 KR 20230001248
(71) Applicant: LG Electronics Inc., Yeongdeungpo-gu Seoul 07336 (KR)
(72) Inventor: HYUN, Ok Chun, Seoul 08592 (KR); BAECK, Seung Jae, Seoul 08592 (KR); LEE, Giseop, Seoul 08592 (KR)
(74) Representative: Vossius & Partner Patentanwälte Rechtsanwälte mbB
(86) International application number: PCT/KR2023/015283
(87) International publication number: WO 2024/147443

(57) **Abstract**

The present disclosure relates to a filter manufacturing apparatus and manufacturing method. The filter manufacturing apparatus of the present disclosure comprises: a base supply device for supplying a base on which nanofibers are accumulated; a fabric retrieval device, which is spaced from the base supply device and retrieves a nanofiber fabric; a base conveyor device for conveying the base from the base supply device toward the fabric retrieval device; a spinning device spaced from the base and spraying a solution onto the base; and a static electricity removal device for electrically neutralizing the conveyed base, wherein the static electricity removal device can be disposed between the spinning device and the base supply device.

## Description

### Technical Field

The present disclosure relates to a filter manufacturing apparatus and a filter manufacturing method that enable uniform formation of nanofibers.

### Background Art

A nanofiber is a fiber with a diameter ranging from several nanometers to less than 1000 nanometers. One method of producing nanofibers is electrospinning. Electrospinning is performed by using an electrospinning apparatus, which includes a nozzle, a collector, and a power supply unit. In this electrospinning apparatus, a voltage is applied between the nozzle and the collector by a power source, thereby charging the nozzle and the collector.

When a solution, which serves as a raw material, is discharged from a nozzle while a voltage is applied thereto, a cone-shaped protrusion which is referred to as a Taylor cone and is formed of the solution is formed at the tip opening of the nozzle. When the applied voltage is gradually increased and a Coulomb force exceeds the surface tension of the solution, the solution is ejected from the tip of the Taylor cone, forming an electrospinning jet. The electrospinning jet travels to the collector due to the Coulomb force and is collected as nanofibers on the collector.

The "APPARATUS AND METHOD FOR MANUFACTURING FILTER" disclosed in Korean Patent No. 1767875 includes: a support supply unit for supplying a support; a support winding unit spaced apart in one direction from the support supply unit and configured to retrieve the support supplied from the support supply unit; a collector disposed between the support supply unit and the support winding unit, and configured to convey the supplied support in one direction; and a spinning device spaced apart upward from the collector and configured to spin a polymer solution onto the conveyed support.

In the conventional apparatus and method for manufacturing a filter, while the support supplied from the support supply unit is supplied in one direction by the collector, triboelectric charging occurs on the surface of the support. Due to the triboelectric charging generated on the surface of the conveyed support, nanofibers spun from the spinning device tend to be concentrated and deposited on the charged fibers of the support. As a result, an uneven nanofiber layer having relatively large pores is formed between the concentrated nanofibers.

In addition, in order to fill the large pores formed between the unevenly formed nanofibers, it is necessary to increase the spinning amount of nanofibers. However, increasing the spinning amount of nanofibers leads to a rise in pressure loss of a filter and results in degradation in performance thereof.

In addition, since the nanofiber layer deposited on the support has weak adhesion to the surface of the support, there is a problem in that interfacial separation in which the nanofiber layer is separated from the surface of the support occurs during subsequent processing.

### Disclosure

### Technical Problem

An objective of the present disclosure may be to provide a filter manufacturing apparatus and a filter manufacturing method in which the uniformity of nanofibers is improved.

Another objective of the present disclosure may be to provide a filter manufacturing apparatus and a filter manufacturing method in which a spinning amount is reduced.

Another objective of the present disclosure may be to provide a filter manufacturing apparatus and a filter manufacturing method in which the pressure loss of air passing through a filter is reduced.

Another objective of the present disclosure may be to provide a filter manufacturing apparatus and a filter manufacturing method in which the dust collection efficiency of a filter is improved.

Another objective of the present disclosure may be to provide a filter manufacturing apparatus and a filter manufacturing method in which the generation of triboelectric charging on a support during a filter manufacturing process is reduced.

Another objective of the present disclosure may be to provide a filter manufacturing apparatus and a filter manufacturing method in which the structural stability of a nanofiber fabric is improved.

Another objective of the present disclosure may be to provide a filter manufacturing apparatus and a filter manufacturing method in which the processability of a nanofiber fabric is improved.

Another objective of the present disclosure may be to provide a filter manufacturing apparatus and a filter manufacturing method in which a bonding strength between a nanofiber layer and a support is improved.

Another objective of the present disclosure may be to provide a filter manufacturing apparatus and a filter manufacturing method in which an interfacial separation phenomenon of a nanofiber fabric is reduced.

### Technical Solution

In order to accomplish the above objectives, according to the present disclosure, a static eliminator may be used to ensure that a base on which nanofiber fabrics are stacked is not charged, thereby enabling a nanofiber layer to be formed uniformly.

According to the present disclosure, when bonding the nanofiber layer to a protective member or bonding the nanofiber layer to a support, spot bonding may be performed at multiple locations.

According to the present disclosure, when bonding the nanofiber layer to the protective member or bonding the nanofiber layer to the support, ultrasonic waves may be applied to the bonding spots to perform the bonding.

In order to achieve the above objectives, according to an aspect of the present disclosure, a filter manufacturing apparatus includes: a base supply device configured to supply a base on which nanofibers are deposited; a fabric retrieval device spaced apart from the base supply device and configured to retrieve a nanofiber fabric; a base conveying device configured to convey the base from the base supply device toward the fabric retrieval device; a spinning device spaced apart from the base and configured to eject a solution onto the base; and a static eliminator configured to electrically neutralizes the conveyed base, wherein the static eliminator may be disposed between the spinning device and the base supply device, so that the base may be electrically neutralized before spinning the solution onto the supplied base.

The filter manufacturing apparatus may further include: a base retrieval device configured to separate the base from a nanofiber layer and retrieve the base, wherein the base supply device may supply a release paper, the static eliminator may electrically neutralize the supplied release paper, the base conveying device may convey the release paper, the spinning device may eject a solution onto the conveyed release paper, and the base retrieval device may retrieve the release paper separated from the formed nanofiber layer, so that the nanofibers may be spun onto release paper with low surface unevenness.

The filter manufacturing apparatus may further include: a protective member stacking device configured to supply a protective member that covers a surface of the nanofiber layer, wherein the protective member stacking device may be disposed downstream of the spinning device in a conveying direction of the release paper, so that the protective member may be stacked onto the nanofiber layer.

The protective member supply device may be arranged on upstream of the base retrieval device in the conveyance direction of the release paper, so that the protective member may be stacked onto the nanofiber layer before the release paper is retrieved.

The filter manufacturing apparatus may further include: a protective member bonding device configured to bond the protective member and the nanofiber layer to each other, wherein the protective member bonding device may be disposed upstream of the base retrieval device in the conveying direction of the release paper, so that the protective member and the nanofiber layer may be bonded before the release paper is retrieved.

The filter manufacturing apparatus may further include: a support stacking device configured to supply a support that covers a back surface of the nanofiber layer, wherein the support stacking device may be disposed downstream of the base retrieval device in a conveying direction of the release paper, so that the support that protects the nanofiber layer may be stacked after the release paper is retrieved.

The support supply device may be arranged downstream of the spinning device in the conveyance direction of the release paper, so that the support with significant surface unevenness may be supplied after the nanofiber is spun.

The filter manufacturing apparatus may further include: a support bonding device configured to bond the support and the nanofiber layer to each other, wherein the support bonding device may be disposed downstream of the support stacking device in the conveying direction of the release paper, so that the support and the nanofiber layer may be bonded together.

In order to achieve the above objectives, according to an aspect of the present disclosure, a filter manufacturing method includes: conveying a base on which nanofibers are deposited; neutralizing the conveyed base electrically; and spinning a solution onto the neutralized base, so that the nanofibers may be spun onto the electrically neutralized base.

In the conveying of the base, a release paper on which the nanofibers are deposited may be conveyed, in the neutralizing of the base, the conveyed release paper may be electrically neutralized, and in the spinning, the solution may be spun onto the neutralized release paper, so that the nanofibers may be spun onto the release paper with low surface unevenness.

Specific details of other embodiments are included in the detailed description and the drawings.

### Advantageous Effects

According to at least one of the embodiments of the present disclosure, the static eliminator may be disposed between the spinning device and the base supply device, so that the base may be electrically neutralized before a solution is spun, thereby reducing triboelectric charging generated during the base supply process. As the triboelectric charging is reduced, the uniformity of the nanofiber layer stacked on the base may be improved.

According to at least one of the embodiments of the present disclosure, by using the release paper with low surface unevenness as the base, triboelectric charging during the supply process of the release paper may be reduced, and the uniformity of the nanofiber layer stacked onto the release paper may be improved.

According to at least one of the embodiments of the present disclosure, as the uniformity of the nanofiber layer is improved, the size of each of pores formed between the nanofibers may be uniform and be reduced. As the size of each of the formed pores decreases and becomes uniform overall, the amount of nanofibers spun to form the nanofiber layer may be reduced.

According to at least one of the embodiments of the present disclosure, as the uniformity of the nanofiber layer is improved, the pressure loss of air passing through a filter made of nanofibers may be reduced, and dust collection efficiency may be improved.

According to at least one of the embodiments of the present disclosure, the protective member supply device may be disposed downstream of the spinning device, and thus the protective member may be stacked onto the nanofiber layer, thereby improving the structural stability of a nanofiber fabric.

According to at least one of the embodiments of the present disclosure, the protective member supply device may be disposed upstream of the base retrieval device in the conveying direction of the release paper, so that the protective member may be supplied while the release paper supports the nanofiber layer. Accordingly, the structural stability of the nanofiber fabric may be improved.

According to at least one of the embodiments of the present disclosure, the protective member bonding device may be disposed upstream of the base retrieval device in the conveying direction of the release paper, allowing the protective member to be securely bonded to the nanofiber layer while the release paper supports the nanofiber layer. Accordingly, the structural stability of the nanofiber fabric may be improved.

According to at least one of the embodiments of the present disclosure, the support supply device may be disposed downstream of the base retrieval device in the conveying direction of the release paper, so that the support may be supplied onto the nanofiber layer after the release paper is removed, thereby improving the structural stability of the nanofiber fabric.

According to at least one of the embodiments of the present disclosure, by supplying the support with significant surface unevenness after the nanofiber layer is formed, the structural stability of the nanofibers may be improved, and triboelectric charging generated during the manufacturing process of the nanofiber fabric may be reduced.

According to at least one of the embodiments of the present disclosure, by including the support bonding device that bonds the support to the nanofiber layer, a bonding strength between the support and the nanofiber layer may be enhanced.

According to at least one of the embodiments of the present disclosure, a bonding strength between the support and the nanofiber layer may be improved, thereby reducing interfacial separation of the nanofiber fabric during the manufacturing process. Accordingly, the processability and structural stability of the nanofiber fabric may be enhanced.

### Description of Drawings

FIG. 1 is a view approximately illustrating a filter manufacturing apparatus according to an embodiment of the present disclosure.
FIG. 2 is a view approximately illustrating a filter manufacturing apparatus according to another embodiment of the present disclosure.
FIG. 3 is a view approximately illustrating the formation process of nanofibers.
FIG. 4 approximately shows a cross-section in which nanofibers are deposited on a support by a conventional filter manufacturing apparatus, and a cross-section in which nanofibers are deposited on a base by a filter manufacturing apparatus and a filter manufacturing method according to an embodiment of the present disclosure.
FIG. 5 shows microscope images of the surface of a nanofiber layer obtained by the conventional filter manufacturing apparatus and the surface of a nanofiber layer obtained by a filter manufacturing apparatus and a filter manufacturing method according to an embodiment of the present disclosure.
FIG. 6 illustrates schematic diagrams of bonding portions on the front and back surfaces of a nanofiber fabric obtained by the filter manufacturing apparatus and filter manufacturing method according to an embodiment of the present disclosure.
FIG. 7 illustrates schematic diagrams of a cross-section of a conventional nanofiber fabric and a cross-section of a nanofiber fabric obtained by a filter manufacturing apparatus and a filter manufacturing method according to an embodiment of the present disclosure.
FIG. 8 is a flowchart of a filter manufacturing method according to an embodiment of the present disclosure.

### Best Mode

Hereinafter, some embodiments of the present disclosure will be described in detail with reference to exemplary drawings. When adding reference numerals to components in each drawing, it should be noted that, as much as possible, identical components are given the same numerals even if they are shown in different drawings. When describing the embodiments of the present disclosure, if a detailed description of a related known configuration or function is determined to hinder understanding of the embodiments of the present disclosure, the detailed description is omitted.

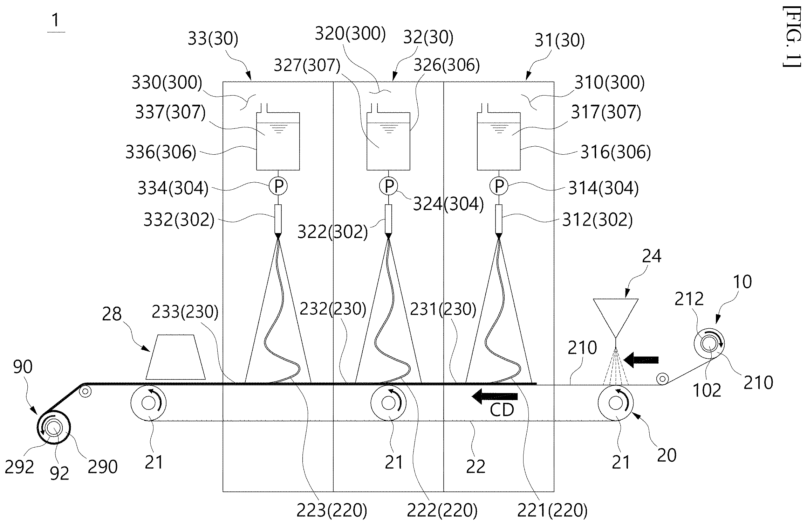

Referring to FIG. 1, a filter manufacturing apparatus 1 will be described.

The filter manufacturing apparatus 1 may include a base supply device 10 that supplies a base 210 onto which nanofibers 220 are deposited. The base 210 may be formed of one fibrous material selected from a group consisting of nonwoven fabric, woven fabric, and knitted fabric. Alternatively, the base 210 may be a release paper 210a having at least one surface coated. The coated surface of the release paper 210a may have a smooth characteristic.

The base supply device 10 may supply the base 210 in one direction. The nanofibers 220 may be deposited on the base 210 supplied by the base supply device 10. The base supply device 10 may be arranged on the most upstream side in the conveying direction (CD) of the base 210.

The base supply device 10 may include a base supply shaft 102 in the form of a roller. The base 210 may be mounted on the base supply shaft 102 by being wound around a base roll 212. The base 210 mounted on the base supply shaft 102 via the base roll 212 may be supplied in one direction.

The base 210 supplied from the base supply device 10 may be retrieved by a fabric retrieval device 90. During operation of the filter manufacturing apparatus, the base supply device 10 and the fabric retrieval device 90 may operate simultaneously.

The filter manufacturing apparatus 1 may include the fabric retrieval device 90 that retrieves a nanofiber fabric 290. The retrieved nanofiber fabric 290 may include a nanofiber fabric 290 stacked with a nanofiber layer 230 and the base 210, or a nanofiber fabric 290 stacked with a support 270, the nanofiber layer 230, and a protective layer 240.

The fabric retrieval device 90 may be spaced apart from the base supply device 10. For example, the fabric retrieval device 90 may be spaced apart from the base supply device 10 in the conveying direction (CD) of the base. The fabric retrieval device 90 may be disposed at the most downstream side in the conveying direction (CD) of the base 210. For example, the base supply device 10 may be disposed at a point at which the conveyance of the base 210 starts, and the fabric retrieval device 90 may be disposed at a point at which the conveyance of the base 210 ends.

The fabric retrieval device 90 may include a roller-shaped fabric retrival shaft 92. The nanofiber fabric 290 may be wound around a nanofiber fabric roll 292 as the fabric retrieval shaft 92 rotates.

A base conveying device 20 may be disposed between the fabric retrieval device 90 and the base supply device 10.

The filter manufacturing apparatus 1 may include the base conveying device 20 for conveying the base 210. The base conveying device 20 may convey the base 210 supplied from the base supply device 10 in one direction. The base conveying device 20 may convey the supplied base 210 toward a release paper retrieval device 60a. The base conveying device 20 may convey the supplied base 210 toward the fabric retrieval device 90. For example, the base conveying device 20 may convey the base 210 from the base supply device 10 to the fabric retrieval device 90.

The base conveying device 20 may include a collector 22 on which the base 210 is placed and conveyed. The collector 22 may collect the nanofibers 220 spun from a spinning device 30. The collector 22 may be in the form of a belt made of metal. The metallic collector 22 may be charged by a voltage applied by a power supply unit (not shown).

The base conveying device 20 may include a plurality of rollers 21 configured to circulate the collector 22. The plurality of rollers 21 may be spaced apart from each other. For example, the plurality of rollers 21 may be arranged in the conveying direction (CD) of the base 210. The collector 22 may be horizontally laid across the plurality of rollers 21. The collector 22 may be circulated by the rotation of the plurality of rollers 21. The circulating direction of the collector 22 may be the same as the rotational direction of the plurality of rollers 21. For example, when the plurality of rollers 21 rotate counterclockwise, the collector 22 may be circulated counterclockwise, and the base 210 placed on the collector 22 may be conveyed by the collector 22.

The filter manufacturing apparatus 1 may include the spinning device 30 that ejects a solution onto the base 210. The spinning device 30 may spin nanofibers 220. A polymer solution 307 ejected from the spinning device 30 may be nanofiberized as a solvent thereof evaporates in the air. The formed nanofibers 220 may be deposited on the base 210. The nanofibers 220 deposited on the base 210 may form a nanofiber layer 230.

The spinning device 30 may be spaced apart from the base 210. The spinning device 30 may be positioned above the base 210. The spinning device 30 may be arranged to be spaced apart upward from the base 210. The spinning device 30 may be spaced apart from the base 210 by a predetermined height. The base 210 may be located below the spinning device 30.

The spinning device 30 may be disposed above the base conveying device 20 that conveys the base 210. The spinning device 30 may be spaced apart upward from the base conveying device 20. For example, the spinning device 30 may be arranged above the collector 22.

The filter manufacturing apparatus 1 may include a spinning chamber 300 in which the spinning device 30 is disposed. The spinning chamber 300 may be a space in which nanofibers 220 are formed. The spinning chamber 300 may be maintained under predetermined conditions for forming the nanofibers 220. The predetermined conditions may include a predetermined temperature range, a predetermined humidity range, and a predetermined atmospheric pressure range. To maintain the spinning chamber 300 under the predetermined conditions, the spinning chamber 300 may be formed as a sealed space.

The base 210 conveyed by the base conveying device 20 may pass through the spinning chamber 300. The nanofibers 220 ejected from the spinning device 30, which is disposed in the spinning chamber 300, may be deposited on the base 210 passing through the spinning chamber 300.

The spinning device 30 may include a nozzle 302 from which the polymer solution 307 is ejected. The polymer solution 307 may be ejected from the tip of the nozzle 302. The tip of the nozzle 302 may be arranged toward the base 210, and the polymer solution 307 may be sprayed onto the base 210.

The spinning device 30 may include a solution tank 306 that stores the polymer solution 307. The solution tank 306 may maintain the polymer solution 307 under a predetermined condition. The predetermined condition may include a predetermined temperature range. The solution tank 306 may be disposed in the spinning chamber 300.

The spinning device 30 may include a pipe (not shown) connecting the solution tank 306 with the nozzle 302. The pipe may be formed of a flexible material. The polymer solution 307 stored in the solution tank 306 may move through the pipe to the nozzle 302 and be ejected from the nozzle 302 onto the base 210.

The spinning device 30 may include a pump 304 that provides power so that the polymer solution 307 stored in the solution tank 306 is moved through the pipe to the nozzle 302. The pump 304 may be arranged on the pipe.

The filter manufacturing apparatus 1 may include the power supply unit (not shown) that charges the spinning device 30. The power supply unit may be electrically connected to the spinning device 30. The power supply unit may charge the tip of the nozzle 302. The power supply unit may charge the polymer solution 307 accumulated at the tip of the nozzle 302. When a voltage applied to the polymer solution 307 exceeds a critical voltage (Vc), spinning may be initiated. The critical voltage (Vc) may be a voltage at which an electrical force including electrostatic repulsion and Coulomb force between surface charges exceeds the surface tension of the polymer solution 307.

The power supply unit may be electrically connected to the base conveying device 20. The power supply unit may charge the base conveying device 20. The base conveying device 20 may include the collector 22. The power supply unit may apply a voltage to charge the spinning device 30 and the collector 22. For example, the power supply unit may charge the spinning device 30 negatively (-) and charge the collector 22 positively (+). As the spinning device 30 is charged, the ejected polymer solution 307 may be deposited onto the charged collector 22. Accordingly, the nanofibers 220 may be deposited onto the base 210 conveyed along the collector 22.

The spinning device 30 may include a plurality of spinning devices 31, 32, and 33. For example, the spinning device 30 may include a first spinning device 31, a second spinning device 32, and a third spinning device 33. The plurality of spinning devices 31, 32, and 33 may be arranged in the conveyance direction (CD) of the base 210. For example, the first spinning device 31, the second spinning device 32, and the third spinning device 33 may be sequentially arranged in the conveyance direction (CD) of the base 210.

The plurality of spinning devices 31, 32, and 33 may include spinning chambers 310, 320, and 330, respectively. For example, the first spinning device 31 may include a first spinning chamber 310, the second spinning device 32 may include a second spinning chamber 320, and the third spinning device 33 may include a third spinning chamber 330. The plurality of spinning chambers 310, 320, and 330 may be maintained under formation conditions of different nanofibers 221, 222, and 223, respectively.

The plurality of spinning devices 31, 32, and 33 may each include nozzles 312, 322, and 332, respectively. For example, the first spinning device 31 may include a first nozzle 312, the second spinning device 32 may include a second nozzle 322, and the third spinning device 33 may include a third nozzle 332.

Different polymer solutions 317, 327, and 337 may be ejected from the plurality of nozzles 312, 322, and 332, respectively. For example, the first nozzle 312 may eject a first solution 317, the second nozzle 322 may eject a second solution 327, and the third nozzle 332 may eject a third solution 337. The nanofibers 220 may include the plurality of nanofibers 221, 222, and 223 formed from the different polymer solutions 317, 327, and 337. A first nanofiber 221 may be formed as a solvent evaporates from the first solution 317, a second nanofiber 222 may be formed as a solvent evaporates from the second solution 327, and a third nanofiber 223 may be formed as a solvent evaporates from the third solution 337.

The solutions 317, 327, and 337 ejected from the respective nozzles 312, 322, and 332 may respectively form different nanofiber layers 231, 232, and 233. For example, the nanofiber layer 230 may include a first nanofiber layer 231 formed from the first solution 317, a second nanofiber layer 232 formed from the second solution 327, and a third nanofiber layer 233 formed from the third solution 337.

The first nanofiber layer 231 may serve as a base layer. The first nanofiber layer 231 may be stacked on the base to support the second nanofiber layer 232. The second nanofiber layer 232 may serve as a filtration layer. The second nanofiber layer 232 may be stacked on the first nanofiber layer 231 to perform dust collection. The third nanofiber layer 233 may serve as a protection layer. The third nanofiber layer 233 may be stacked on the second nanofiber layer 232 to protect the second nanofiber layer 232.

The plurality of spinning devices 31, 32, and 33 may respectively include solution tanks 316, 326, 336, pipes, and pumps 314, 324, 334. For example, the first spinning device 31 may include a first solution tank 316, a first pipe, and a first pump 314, the second spinning device 32 may include a second solution tank 326, a second pipe, and a second pump 324; and the third spinning device 33 may include a third solution tank 336, a third pipe, and a third pump 334.

The plurality of spinning devices 31, 32, and 33 may respectively include power supply units for charging the corresponding nozzles 312, 322, and 332.

The filter manufacturing apparatus 1 may include a static eliminator 24 that electrically neutralizes the conveyed base 210. The static eliminator 24 may electrically neutralize the charged base 210. That is, the static eliminator 24 may eliminate static electricity from the base.

The static eliminator 24 may electrically neutralize the charged base 210 by means of a physico-chemical method.

The static eliminator 24 may include a voltage-applied static eliminator, a self-discharge static eliminator, and a radiation-applied static eliminator. The voltage-applied static eliminator may apply a high voltage by using a needle electrode, generating air ions through the generation of corona discharge. The generated air ions may neutralize the charges of the charged base 210. The radiation-applied static eliminator may generate ions necessary for eliminating static electricity through ionization of air molecules by radiation. The radiation-applied static eliminator may emit soft X-rays toward the charged base 210 to ionize gas in the air and eliminate static electricity.

The static eliminator 24 may spray a neutralizing agent onto the base 210 to electrically neutralize the base 210.

The static eliminator 24 may be arranged downstream of the base supply device 10 in the conveyance direction (CD) of the base. The static eliminator 24 may be arranged upstream of the spinning device 30 in the conveyance direction (CD) of the base. The static eliminator 24 may be arranged between the spinning device 30 and the base supply device 10. By arranging the static eliminator 24 upstream of the spinning device 30, the base 210 may be electrically neutralized before the solution 307 is spun. Accordingly, triboelectric charging generated during the base supply process may be reduced, and the uniformity of the nanofiber layer deposited on the base may be improved.

Additionally, the uniformity of the nanofiber layer may be improved, resulting in the sizes of pores formed between the nanofibers being uniform while relatively decreasing.

In addition, since the size of each of the pores formed decreases, the amount of nanofibers spun to form the nanofiber layer may be reduced.

The filter manufacturing apparatus 1 may include a drying device 28 that dries the nanofiber fabric 290. The drying device 28 may evaporate a solvent remaining in the nanofiber fabric 290. The drying device 28 may supply heat toward the nanofiber fabric 290. For example, the drying device 28 may discharge hot air toward the nanofiber fabric 290. By drying the nanofiber fabric 290 with the drying device 28, solvents remaining in the nanofibers 220 may evaporate and then the fabric may be wound around the fabric retrieval device 90.

The drying device 28 may include an infrared lamp (not shown) that generates heat. The infrared lamp may irradiate the nanofiber fabric 290 with infrared rays.

The drying device 28 may include a fan (not shown) for supplying heat generated by the infrared lamp to the nanofiber fabric 290. The fan may move air heated by the infrared lamp toward the nanofiber fabric 290.

The drying device 28 may be arranged downstream of the spinning device 30 in the conveyance direction (CD) of the base 210. The drying device 28 may be arranged between the spinning device 30 and the fabric retrieval device 90. By arranging the drying device 28 upstream of the fabric retrieval device 90 in the conveyance direction (CD) of the base 210, residual solvents may be evaporated before the nanofiber fabric 290 is wound.

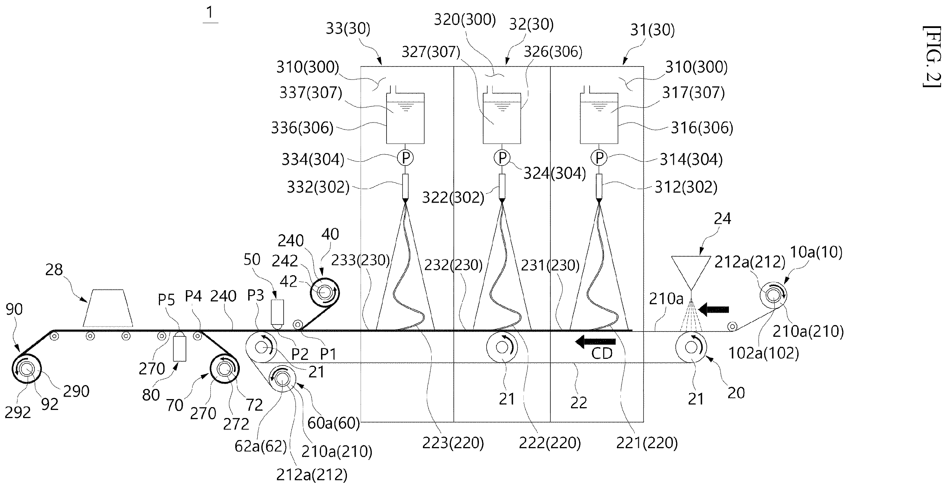

Referring to FIG. 2, the filter manufacturing apparatus 1 will be described.

The base 210 may be the release paper 210a. The release paper 210a may be formed of a paper material with a coated surface. By using the release paper 210a with low surface unevenness as the base, triboelectric charging during the supplying and conveying processes of the release paper 210a may be reduced.

In addition, the uniformity of a nanofiber layer deposited on the release paper may be improved.

In addition, the uniformity of the nanofiber layer may be improved, resulting in the size of each of pores formed between the nanofibers being uniform and reduced relatively.

In addition, the formed pores may become smaller, thereby reducing the amount of nanofibers spun to form the nanofiber layer.

In addition, the uniformity of the nanofiber layer may be improved, thereby reducing the pressure loss of air passing through a filter made of nanofibers.

The base supply device 10 may supply the release paper. The base supply device 10 may be a release paper supply device 10a. The nanofibers 220 may be deposited on the release paper 210a.

The release paper supply device 10a may include a roller-shaped release paper supply shaft 102a. The release paper 210a may be mounted on the release paper supply shaft 102a by being rolled on a release paper roll 212a. The release paper 210a mounted on the release paper supply shaft 102a through the release paper roll 212a may be supplied in one direction.

The base conveying device 20 may convey the release paper 210a. The base conveying device 20 may convey the supplied release paper 210a toward the release paper retrieval device 60a. For example, the base conveying device 20 may convey the release paper 210a supplied from the base supply device 10 to the release paper retrieval device 60a.

The static eliminator 24 may electrically neutralize the supplied release paper 210a. That is, the static eliminator 24 may eliminate static electricity. The static eliminator 24 may electrically neutralize the release paper 210a by a physicochemical method.

The spinning device 30 may eject a solution toward the conveyed release paper 210a to spin nanofibers 220. The nanofibers 220 spun from the spinning device 30 may be uniformly deposited onto the static-eliminated release paper 210a.

A base retrieval device 60 may separate and retrieve the base 210 from the nanofiber layer 230. For example, the base retrieval device 60 may include the release paper retrieval device 60a that separates the base 210 from the nanofiber layer 230 and retrieves the release paper 210a.

The fabric retrieval device 90 may be disposed downstream of the release paper retrieval device 60a in the conveying direction (CD). That is, the fabric retrieval device 90 and the release paper retrieval device 60a may be disposed to be spaced apart from each other. The conveying direction (CD) may be the conveying direction (CD) of the release paper 210a, the nanofiber 220, or the nanofiber fabric 290.

The release paper retrieval device 60a may include a roller-shaped release paper retrieval shaft 62a. The release paper 210a may be wound around the release paper roll 212a as the release paper retrieval shaft 62a rotates.

The filter manufacturing apparatus 1 may include a protective member stacking device 40 for supplying a protective member 240. The protective member 240 may cover the surface of the nanofiber layer 230. The protective member 240 may be formed of one fibrous material selected from a group consisting of nonwoven fabric, woven fabric, and knitted fabric. For example, the protective member 240 may be a nonwoven fabric. The protective member 240 may be stacked on the nanofiber layer 230. By covering the surface of the nanofibers 220 with the protective member 240, the durability and structural stability of the nanofiber fabric 290 may be improved.

The protective member stacking device 40 may be disposed downstream of the spinning device 30 in the conveying direction (CD). For example, the position (P1) at which the protective member 240 is supplied may be located downstream of the position at which the spinning device 30 is disposed in the conveying direction (CD). By disposing a protective member supply device 40 downstream of the spinning device 30 in the conveying direction (CD), the protective member 240 may be stacked on the nanofiber layer 230. Accordingly, the structural stability of the nanofiber fabric may be enhanced.

The protective member stacking device 40 may be disposed between the spinning device 30 and the fabric retrieval device 90 in the conveying direction (CD). The protective member stacking device 40 may also be disposed between the spinning device 30 and the base retrieval device 60 in the conveying direction (CD). The protective member stacking device 40 may be disposed between the spinning device 30 and the release paper retrieval device 60a in the conveying direction (CD). By being disposed upstream of the release paper retrieval device 60a in the conveying direction, the protective member stacking device 40 may supply the protective member while the release paper 210a supports the nanofiber layer 230.

Accordingly, the protective member 240 may be stably stacked on the nanofiber layer 230.

The protective member stacking device 40 may include a protective member supply shaft 42 in the form of a roller. The protective member 240 may be mounted on the protective member supply shaft 42 by being rolled on a protective member roll 242. The protective member 240 mounted on the protective member supply shaft 42 via the protective member roll 242 may be supplied in one direction.

The filter manufacturing apparatus 1 may include a protective member bonding device 50 that bonds the protective member 240 and the nanofiber layer 230 together. The protective member bonding device 50 may bond the protective member 240 and the nanofiber layer 230 to each other through ultrasonic welding. For example, the protective member bonding device 50 may apply ultrasonic waves to melt and bond the protective member 240 and the nanofiber layer 230 together.

By including the protective member bonding device 50 for bonding the protective member 240 and the nanofiber layer 230 to each other, a bonding strength between the protective member 240 and the nanofiber layer 230 may be improved.

In addition, the bonding strength between the protective member and the nanofiber layer may be improved, thereby reducing interfacial separation of the nanofiber fabric during the processing.

In addition, the processability and structural stability of the nanofiber fabric may be improved.

The protective member bonding device 50 may be disposed downstream of the protective member supply device 40 in the conveying direction (CD). The protective member bonding device 50 may be disposed upstream of the release paper retrieval device 60a in the conveying direction (CD). For example, the position (P2) at which the protective member 240 is supplied may be located downstream of the position (P1), at which the protective member 240 is supplied, in the conveying direction (CD). By disposing the protective member bonding device 50 upstream of the release paper retrieval device 60a in the conveying direction (CD), the protective member 240 may be securely bonded to the nanofiber layer 230 while the release paper 210a supports the nanofiber layer 230. Accordingly, the structural stability of the nanofiber fabric may be improved.

The release paper retrieval device 60a may be disposed downstream of the protective member bonding device 50 in the conveying direction (CD). For example, a position (P3) at which the release paper 210a is retrieved may be located downstream of the position (P2) at which the protective member 240 and the nanofiber layer 230 are supplied in the conveying direction (CD). Through this, after the supplied protective member 240 and the nanofiber layer 230 are securely bonded, the release paper 210a may be removed.

The filter manufacturing apparatus 1 may include a support stacking device 70 that supplies the support 270. The support 270 may cover the back side of the nanofiber layer 230. The support 270 may support the nanofiber layer 230. The protective member 240 may be disposed on a first surface of the nanofiber layer 230, and the support 270 may be disposed on a second surface of the nanofiber layer 230 opposite to the first surface of the nanofiber layer 230. Through this, the durability and structural stability of the nanofiber fabric may be improved.

The support stacking device 70 may be disposed downstream of the release paper retrieval device 60a in the conveying direction (CD). That is, a position (P4) at which the support 270 is stacked on the back surface of the nanofiber layer may be located downstream of the position (P3), at which the release paper 210a is retrieved, in the conveying direction (CD). By disposing the support stacking device 70 downstream of the release paper retrieval device 60a in the conveying direction (CD), the support 270 may be supplied to the nanofiber layer 230 after the release paper 210a is removed, thereby improving the structural stability of the nanofiber fabric 290.

The support stacking device 70 may be disposed downstream of the protective member stacking device 40 in the conveying direction (CD). For example, the position (P4) where the support 270 is supplied may be located downstream of the position (P1), at which the protective member 240 is supplied, in the conveying direction (CD). Accordingly, the support 270 may be stably stacked on the nanofiber layer 230 while the protective member 240 supports the nanofiber layer 230. That is, the protective member 240 may support the nanofiber layer 230 from which the release paper 210a has been removed, and in this state, the support 270 may be stacked.

The support stacking device 70 may be disposed downstream of the spinning device 30 in the conveying direction (CD). The support 270, which has a highly uneven surface, may be supplied after the nanofiber layer 230 has already been uniformly formed, and thus the nanofiber fabric 290 including the uniform nanofiber layer 230 may be manufactured. Accordingly, the amount of nanofiber 220 to be spun may be reduced.

In addition, the pressure loss of air passing through the filter may be reduced.

In addition, the dust collection efficiency of the filter may be improved.

The support stacking device 70 may include a support supply shaft 72 in the form of a roller. The support 270 may be mounted on the support supply shaft 72 by being rolled on a support roll 272. The support 270 mounted on the support supply shaft 72 via the support roll 272 may be supplied in one direction.

The filter manufacturing apparatus 1 may include a support bonding device 80 that bonds the support 270 and the nanofiber layer 230. The support bonding device 80 may bond the support 270 and the nanofiber layer 230 through ultrasonic welding. For example, the support bonding device 80 may apply ultrasonic waves to melt and bond the support 270 and the nanofiber layer 230.

By including the support bonding device 80 that bonds the support 270 and the nanofiber layer 230, bonding strength between the support 270 and the nanofiber layer 230 may be improved.

In addition, the bonding strength between the support and the nanofiber layer may be improved, thereby reducing separation at the interface of the nanofiber fabric during the processing.

In addition, the processability and structural stability of the nanofiber fabric may be improved.

The support bonding device 80 may be arranged downstream of the support stacking device 70 in the conveyance direction (CD). For example, a position P5 at which the support 270 is bonded may be located downstream of a position P4, at which the support 270 is supplied, in the conveyance direction (CD).

The support bonding device 80 may be arranged downstream of the protective member supply device 40 in the conveyance direction (CD). For example, the position P5 at which the support 270 is bonded may be located downstream of the position P1, at which the protective member 240 is supplied, in the conveyance direction (CD). By arranging the support bonding device 80 downstream of the protective member supply device 40 in the conveyance direction (CD), the support 270 may be stably stacked onto the nanofiber layer 230 while the protective member 240 supports the nanofiber layer 230. Accordingly, the structural stability of the nanofiber fabric may be improved.

The drying device 28 may be arranged downstream of the protective member stacking device 40 in the conveyance direction (CD). The drying device 28 may also be arranged downstream of the protective member bonding device 50 in the conveyance direction (CD). The drying device 28 may be arranged downstream of the support stacking device 70 in the conveyance direction (CD). The drying device 28 may be arranged downstream of the support bonding device 80 in the conveyance direction (CD).

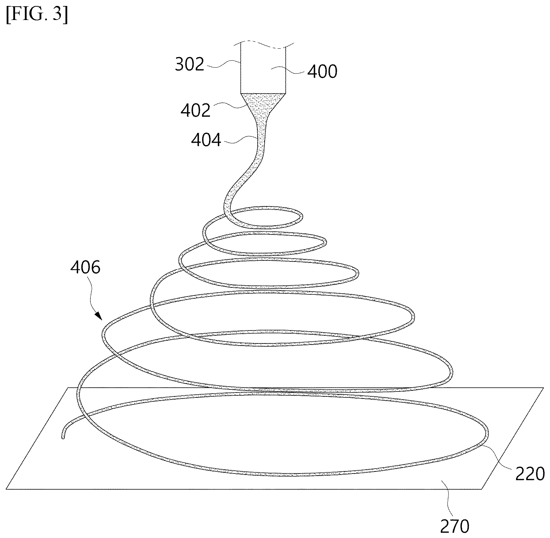

Referring to FIG. 3, the filter manufacturing apparatus 1 and the filter manufacturing method will be described.

When a voltage applied to the spinning device 30 increases and exceeds the critical voltage (Vc), a Taylor cone 402, which is a cone-shaped protrusion made of the polymer solution 307, may be formed at the tip of the nozzle 302, and a jet 402 and 404 may be discharged from the Taylor cone 402. The jet elongated and ejected from the Taylor cone 402 may exhibit a whipping behavior as it descends. In this case, a whipping jet 406 may be elongated as it approaches the collector 22, and in this process, the thickness of the whipping jet 406 may gradually decrease. A straight jet 402 may be formed between the Taylor cone 402 and the whipping jet 406.

During the descent of the whipping jet 406 through the air, a solvent contained in the polymer solution 307 may evaporate. While the solvent evaporates, the thickness of the whipping jet 406 may decrease. The whipping jet 406 from which the solvent has evaporated may be fibrous. When the solvent evaporates as the whipping jet 406 descends, nanofibers 220 may be formed. The formed nanofibers 220 may be deposited on the support 270.

To allow the whipping jet 406 to be nanofiberized while the whipping jet 406 is moving onto the support 270, the spinning device 30 and the collector 22 may be spaced apart from each other by a predetermined distance. For example, the tip of the nozzle 302 of the spinning device 30 and the surface of the support 270 placed on the collector 70 may be spaced apart from each other by a predetermined height. The whipping jet 406 may be nanofiberized while descending the predetermined height. The formed nanofibers 220 may be deposited onto the support 270.

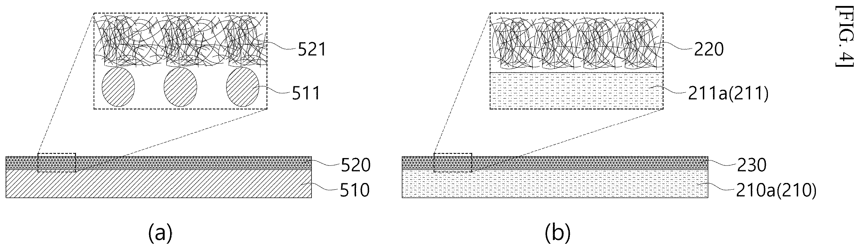

FIG. 4 approximately shows a cross-section in which nanofibers are deposited on a support by a conventional filter manufacturing apparatus, and a cross-section in which nanofibers are deposited on a base by a filter manufacturing apparatus and a filter manufacturing method according to an embodiment of the present disclosure.

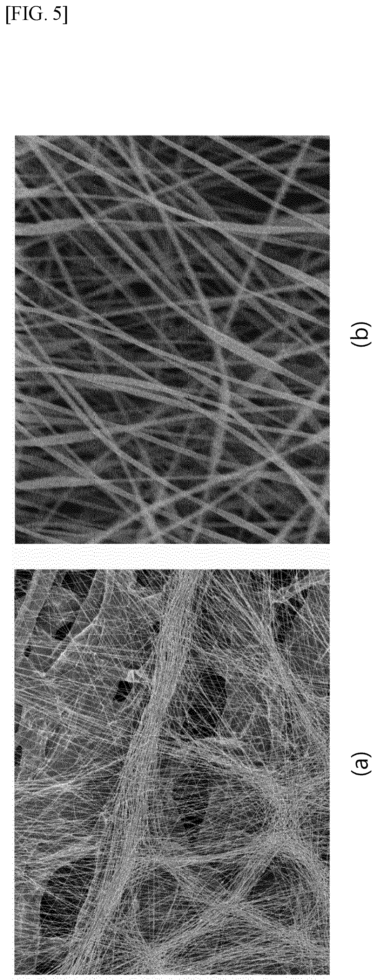

FIG. 5 shows microscope images of the surface of a nanofiber layer obtained by the conventional filter manufacturing apparatus and the surface of a nanofiber layer obtained by a filter manufacturing apparatus and a filter manufacturing method according to an embodiment of the present disclosure.

Referring to FIGS. 4a and 5a, a nanofiber layer formed by a conventional filter manufacturing apparatus will be described. In the process of conveying the support 510 in a roll-to-roll process, static electricity may be easily generated. That is, while the support 510 is supplied and conveyed, surface fibers 511 of the support 510 may be electrostatically charged. The charged surface fibers 511 of the support 510 may attract nanofibers 521 spun from the spinning device, thereby causing a concentration phenomenon of the nanofibers 521 in which the nanofibers 521 are concentrated and deposited on the charged surface fibers 511 of the support 510. Accordingly, a nanofiber layer 520 formed on the support 510 may not be uniformly distributed on the support 510. The nanofibers 521 concentrated and deposited on the charged surface fibers 511 of the support 510 may have pores formed therebetween. To fill the pores formed between the nanofibers, it may be necessary to increase the amount of nanofibers spun. In addition, the non-uniformly formed nanofiber layer may increase the pressure loss of air passing through a filter.

Referring to FIGS. 4b and 5b, a nanofiber layer formed by a filter manufacturing apparatus and a filter manufacturing method according to an embodiment of the present disclosure will be described. According to a filter manufacturing apparatus and a filter manufacturing method according to an embodiment of the present disclosure, the static eliminator 24 may electrically neutralize the base 210 before nanofibers 220 are spun onto the supplied base 210. Accordingly, the nanofibers 220 spun from the spinning device 30 may be uniformly deposited on the surface of the base 210 that is not electrically charged. In addition, the size of each of pores formed between the nanofibers 220 on the surface of the nanofiber layer 230 may be uniform and relatively reduced. That is, the nanofiber concentration phenomenon may be reduced.

The base 210 may include the support 270 and the release paper 210a. When the release paper 210a, which has a surface 211a with low surface unevenness, is supplied as the base 210, triboelectric charging occurring on the surface 211a of the release paper 210a during the supply and conveyance thereof may be reduced. The supplied release paper 210a may be removed after the nanofiber layer 230 is formed, and the support 270 and/or the protective member 240 may cover the nanofiber layer 230. Accordingly, the nanofiber concentration phenomenon may be reduced.

In addition, the pressure loss of air passing through the filter may be reduced.

Furthermore, the dust collection efficiency of the filter may be improved.

Moreover, the size of each of pores formed between the surface fibers of the nanofibers may be more uniform and be reduced, thereby reducing the amount of nanofibers spun.

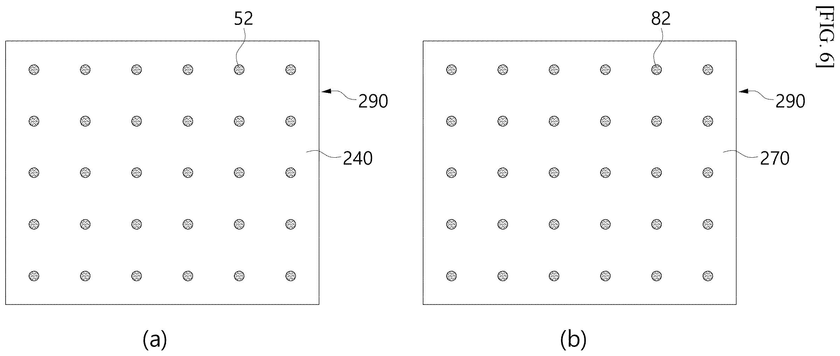

Referring to FIG. 6, a method in which the protective member and the support are bonded to the nanofiber layer will be described.

The protective member bonding device 50 may include a plurality of presses (not shown) that apply pressure to the surface of the protective member 240. The plurality of presses may press the surface of the protective member 240 to bring the protective member 240 and the nanofiber layer 230 into close contact with each other, and then ultrasonic waves may be applied to melt and bond the protective member 240 and the nanofiber layer 230. The plurality of presses may spot-bond the protective member 240 and the nanofiber layer 230 to each other. The same may apply to the support bonding device 80.

The plurality of presses may be arranged in a lattice pattern. That is, the plurality of presses may be arranged in a grid-point pattern. The plurality of presses may be arranged along rows and columns. The plurality of presses may be spaced apart from each other by a predetermined interval in the row and column directions. Accordingly, the front-surface bonding portions 52 and the back-surface bonding portions 82 of the nanofiber fabric may be arranged in a lattice-point pattern or a grid-point pattern.

By being spaced apart from each other, the plurality of presses may allow air to pass through portions other than the bonding portions 52 and 82. In this case, the front-surface bonding portions 52 and the back-surface bonding portions 82 of the nanofiber fabric 290 may overlap with each other in the thickness direction of the nanofiber fabric 290. That is, as the front-surface bonding portions 52 and the back-surface bonding portions 82 are arranged to be aligned in the thickness direction of the nanofiber fabric 290, reduction in an area through which air can pass through the nanofiber fabric 290 may be minimized. That is, the protective member 240 and the nanofiber layer 230 may be bonded together by minimizing the bonding portions. The same may apply to the support 270.

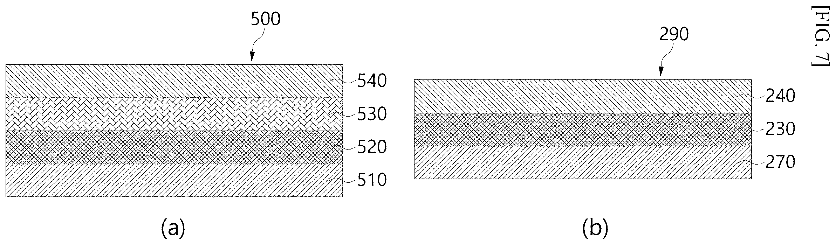

Referring to FIG. 7a, a cross-section of a nanofiber fabric obtained by the conventional filter manufacturing apparatus will be described.

According to the conventional filter manufacturing apparatus, an adhesive layer 530 may be formed between a protective member 540 and the nanofiber layer 530 to bond the protective member 540 and the nanofiber layer 520 to each other. The adhesive layer 530 may be formed by spraying a solution containing an adhesive component onto the nanofiber layer 520. The protective member 540 may be placed on the adhesive layer 530 and bonded thereto. As a result, the air permeability of the nanofiber fabric may be reduced. In addition, the problem of increased pressure loss of air passing through a filter may arise.

Referring to FIG. 7b, a cross-section of a nanofiber fabric obtained by a filter manufacturing apparatus and a filter manufacturing method according to an embodiment of the present disclosure will be described.

According to the filter manufacturing apparatus and the filter manufacturing method according to the embodiment of the present disclosure, the protective member 240 and the nanofiber layer 230 may be bonded to each other by the protective member bonding device 50, so that an adhesive layer may be omitted between the protective member 240 and the nanofiber layer 230. As a result, the air permeability of the nanofiber fabric may be improved. In addition, the pressure loss of air passing through a filter may be reduced.

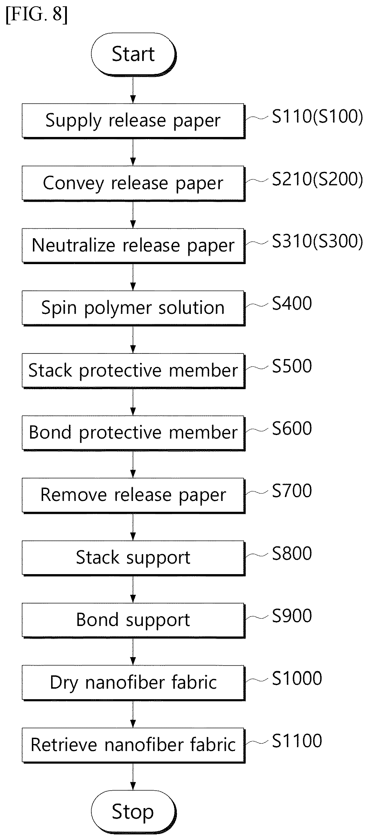

Referring to FIG. 8, the filter manufacturing method will be described.

The filter manufacturing method may include supplying the base in S100. In the supplying of the base in S100, the base 210 on which the nanofibers 220 are deposited may be supplied. The base 210 may include the support 270 and the release paper 210a. For example, the supplying of the base in S100 may be supplying the release paper 210a on which the nanofibers 220 are deposited in S110. By using the release paper 210a having low surface unevenness as the base, triboelectric charging may be reduced during the supplying and conveying of the release paper 210a.

In addition, the uniformity of the nanofiber layer stacked on the release paper may be improved.

In addition, the improved uniformity of the nanofiber layer may reduce pores formed between the nanofibers.

In addition, as the pores formed are reduced, the amount of nanofibers spun to form the nanofiber layer may be decreased.

In addition, the improved uniformity of the nanofiber layer may reduce the pressure loss of air passing through the filter made of nanofibers.

The filter manufacturing method may include conveying the base 210, on which the nanofibers 220 are deposited, in S200. The base 210 may be conveyed in one direction. The base 210 may include the release paper 210a. For example, the conveying of the base in S200 may be conveying the release paper 210a in S210.

The filter manufacturing method may include neutralizing the conveyed base 210 electrically in S300. The neutralizing in S300 may be eliminating static electricity from the base 210. In the neutralizing in S300, the base 210 may be electrically neutralized through a physico-chemical method. For example, in the neutralizing, the base 210 may be neutralized by irradiating the base 210 with an ion beam, spraying a neutralizing agent onto the base 210, or irradiating the base 210 with soft X-rays. However, the neutralizing is not limited thereto, and various methods capable of eliminating static electricity from the base 210 may be used in the neutralizing in S300.

The base 210 may include the release paper 210a. The neutralizing in S300 may be neutralizing the conveyed release paper 210a electrically in S310.

As the base 210 is neutralized in the neutralizing in S300, triboelectric charging generated during the supply of the base 210 may be reduced, and the uniformity of the nanofiber layer 230 stacked on the base 210 may be improved.

In addition, the improved uniformity of the nanofiber layer may reduce the formation of pores between the nanofibers.

In addition, the reduction in the formed pores may lead to a decrease in the amount of nanofibers spun to form the nanofiber layer.

The filter manufacturing method may include spinning a solution onto the neutralized base 210 in S400. In the spinning in S400, the polymer solution 307 may be spun from the nozzle 302 onto the base 210. The spinning in S400 may be performed after the neutralizing in S300. For example, in the spinning in S400, the polymer solution 307 may be spun from the nozzle 302 onto the neutralized release paper 210a.

The spun polymer solution 307 may undergo evaporation of a solvent thereof in the air and be nanofiberized. The formed nanofibers 220 may be uniformly deposited on the base 210.

The filter manufacturing method may include stacking the protective member in S500. The protective member 240 may be placed on the formed nanofibers 220. The protective member 240 may cover the surface of the nanofiber layer 230. The protective member 240 may be formed of one fibrous material selected from a group consisting of nonwoven fabric, woven fabric, and knitted fabric. By covering the surface of the nanofibers 220 with the protective member 240, the durability and structural stability of the nanofiber fabric 290 may be improved.

Stacking a protective member in S500 may be performed after the spinning in S400. Through this process, the protective member 240 may be stacked onto the uniformly formed nanofiber layer 230. The stacking of the protective member 240 may be performed after the spinning, and thus even if the protective member 240 is electrostatically charged due to friction during the supply process, the concentration of the already formed nanofibers 220 may not occur.

The filter manufacturing method may include bonding the protective member 240 and the nanofiber layer 230 to each other in S600. In the bonding of the protective member in S600, the protective member 240 and the nanofiber layer 230 may be ultrasonically welded. That is, the protective member 240 and the nanofiber layer 230 may be partially melted and bonded together. By bonding the protective member 240 and the nanofiber layer 230 together, a bonding strength between the protective member 240 and the nanofiber layer 230 may be improved.

In addition, since the bonding strength between the protective member and the nanofiber layer is improved, the interfacial separation of the nanofiber fabric during the manufacturing processing may be reduced.

In addition, the processability and structural stability of the nanofiber fabric may be improved.

The bonding of the protective member in S600 may be performed after the stacking of the protective member in S500. The bonding of the protective member in S600 may be performed before removing the release paper in S700. By performing the bonding of the protective member in S600 before the removing of the release paper in S700, the protective member 240 may be securely bonded to the nanofiber layer 230 while the release paper 210a supports the nanofiber layer 230. As a result, the structural stability of the nanofiber fabric may be improved.

The filter manufacturing method may include the removing of the release paper 210a in S700. In the removing of the release paper in S700, the release paper 210a supporting the nanofiber layer 230 may be removed. That is, the release paper 210a disposed on the lower side of the nanofiber layer 230 may be removed. When the release paper 210a is removed, the nanofiber layer 230 and the protective member 240 disposed on the nanofiber layer 230 may remain, and the protective member 240 may support the nanofiber layer 230 so that the shape of the nanofiber layer 230 may be maintained.

The removing of the release paper in S700 may be performed after the stacking of the protective member in S500. The removing of the release paper in S700 may be performed after the bonding of the protective member in S600. Through this, the release paper 210a may be removed after the supplied protective member 240 and the nanofiber layer 230 are securely bonded. As a result, the stability of the process of the filter manufacturing method may be improved.

The filter manufacturing method may include stacking the support 270 in S800. The support 270 may cover the back surface of the nanofiber layer 230. The support 270 may support the nanofiber layer 230. The protective member 240 may be disposed on a first surface of the nanofiber layer 230, and the support 270 may be disposed on the second surface of the nanofiber layer 230 opposite to the first surface of the nanofiber layer 230. Through this, the durability and structural stability of the nanofiber fabric may be improved.

The stacking of the support in S800 may be performed after the removing of the release paper in S700. After the release paper 210a disposed on the back surface of the nanofiber layer 230 is removed, the support 270 may be disposed on the back surface of the nanofibers 220 from which the release paper 210a has been removed.

The stacking of the support in S800 may be performed after the spinning in S400. Through this, the support 270 may be stacked onto the uniformly formed nanofiber layer 230. For example, the nanofiber fabric 290 including the protective member 240 may be disposed on the support 270. The stacking of the support 270 may be performed after the spinning in S400, and thus even if the support 270 is triboelectrically charged during the supplying process, the concentration of the already formed nanofibers 220 may be prevented.

The filter manufacturing method may include bonding the support 270 to the nanofiber layer 230 in S900. In the bonding of the support in S900, the support 270 and the nanofiber layer 230 may be ultrasonically welded. That is, the support 270 and the nanofiber layer 230 may be partially melted and bonded together. By bonding the support 270 and the nanofiber layer 230 together, a bonding strength between the support 270 and the nanofiber layer 230 may be improved.

In addition, since the bonding strength between the support and the nanofiber layer is improved, the interfacial separation of the nanofiber fabric during the manufacturing process may be reduced.

In addition, the processability and structural stability of the nanofiber fabric may be improved.

The filter manufacturing method may include drying the nanofiber fabric 290 in S1000. In the drying in S1000, the nanofiber fabric 290 may be dried to evaporate any remaining solvent. In the drying in S1000, heat may be supplied to the nanofiber fabric 290. For example, in the drying in S1000, hot air may be supplied to the nanofiber fabric 290.

The drying in S1000 may be performed after the bonding of the protective member in S600. The nanofiber fabric 290 dried in the drying in S1000 may subsequently be wound when retrieving the fabric in S1100.

The filter manufacturing method may include the retrieving of the nanofiber fabric 290 in S1100. The retrieving of the fabric in S1100 may be performed after the drying in S1000.

Referring to FIGS. 1 to 8, according to an aspect of the present disclosure, the filter manufacturing apparatus may include: the base supply device configured to supply the base on which nanofibers are deposited; the fabric retrieval device spaced apart from the base supply device and configured to retrieve a nanofiber fabric; the base conveying device configured to convey the base from the base supply device toward the fabric retrieval device; the spinning device spaced apart from the base and configured to eject a solution onto the base; and the static eliminator configured to electrically neutralizes the conveyed base, wherein the static eliminator may be disposed between the spinning device and the base supply device.

According to another aspect of the present disclosure, the filter manufacturing apparatus may further include: the base retrieval device configured to separate the base from the nanofiber layer and retrieve the base, wherein the base supply device may supply the release paper, the static eliminator may electrically neutralize the supplied release paper, the base conveying device may convey the release paper, the spinning device may eject a solution onto the conveyed release paper, and the base retrieval device may retrieve the release paper separated from the formed nanofiber layer.

According to another aspect of the present disclosure, the filter manufacturing apparatus may further include: the protective member stacking device configured to supply the protective member that covers a surface of the nanofiber layer, wherein the protective member stacking device may be disposed downstream of the spinning device in the conveying direction of the release paper.

According to another aspect of the present disclosure, the protective member stacking device may be disposed upstream of the base retrieval device in the conveying direction of the release paper.

According to another aspect of the present disclosure, the filter manufacturing apparatus may further include: the protective member bonding device configured to bond the protective member and the nanofiber layer to each other, wherein the protective member bonding device may be disposed upstream of the base retrieval device in the conveying direction of the release paper.

According to another aspect of the present disclosure, the protective member bonding device may include: the plurality of presses that are arranged in a grid-point pattern and apply pressure to the surface of the protective member.

According to another aspect of the present disclosure, the filter manufacturing apparatus may further include: the support stacking device configured to supply the support that covers the back surface of the nanofiber layer, wherein the support stacking device may be disposed downstream of the base retrieval device in the conveying direction of the release paper.

According to another aspect of the present disclosure, the support stacking device may be disposed downstream of the spinning device in the conveying direction of the release paper.

According to another aspect of the present disclosure, the filter manufacturing apparatus may further include: the support bonding device configured to bond the support and the nanofiber layer to each other, wherein the support bonding device may be disposed downstream of the support stacking device in the conveying direction of the release paper.

According to another aspect of the present disclosure, the filter manufacturing apparatus may further include: the drying device configured to dry the base on which the nanofiber layer is formed, wherein the drying device may be disposed downstream of the spinning device in the conveying direction of the base.

According to another aspect of the present disclosure, the filter manufacturing apparatus may further include: the drying device configured to dry the nanofiber fabric, wherein the drying device may be disposed downstream of the support stacking device in the conveying direction of the release paper.

Referring to FIGS. 1 to 8, according to an aspect of the present disclosure, the filter manufacturing method may include: conveying the base on which nanofibers are deposited; neutralizing the conveyed base electrically; and spinning the solution onto the neutralized base.

According to another aspect of the present disclosure, in the conveying of the base, the release paper on which the nanofibers are deposited may be conveyed, in the neutralizing of the base, the conveyed release paper may be electrically neutralized, and in the spinning, the solution may be spun onto the neutralized release paper.

According to another aspect of the present disclosure, the filter manufacturing method may further include: stacking the protective member that covers the surface of the nanofiber layer, wherein the stacking of the protective member may be performed after the spinning.

According to another aspect of the present disclosure, the filter manufacturing method may further include: removing the release paper that supports the nanofiber layer after the nanofiber layer is formed, wherein the removing of the release paper may be performed after stacking the protective member.

According to another aspect of the present disclosure, the filter manufacturing method may further include: bonding the protective member to the nanofiber layer.

According to another aspect of the present disclosure, the bonding of the protective member may be performed before the removing of the release paper.

According to another aspect of the present disclosure, the filter manufacturing method may further include: stacking the support that covers the back surface of the nanofiber layer after the removing of the release paper.

According to another aspect of the present disclosure, the stacking of the support may be performed after the spinning.

According to another aspect of the present disclosure, the filter manufacturing method may further include: bonding the support and the nanofiber layer to each other.

According to another aspect of the present disclosure, the filter manufacturing method may further include: drying the nanofiber fabric, in which the nanofiber layer and the protective member are bonded to each other, after the bonding of the protective member.

In the foregoing description, all the components according to the embodiments of the present disclosure have been described as being combined into a single unit or operating in combination, but the present disclosure is not necessarily limited to such embodiments. That is, within the scope of the purpose of the present disclosure, all the components may be selectively combined and operate as one or more units.

## Claims

1. A filter manufacturing apparatus comprising:
a base supply device configured to supply a base on which nanofibers are deposited;
a fabric retrieval device spaced apart from the base supply device and configured to retrieve a nanofiber fabric;
a base conveying device configured to convey the base from the base supply device toward the fabric retrieval device;
a spinning device spaced apart from the base and configured to eject a solution onto the base; and
a static eliminator configured to electrically neutralizes the conveyed base,
wherein the static eliminator is disposed between the spinning device and the base supply device.

2. The filter manufacturing apparatus of claim 1, further comprising:
a base retrieval device configured to separate the base from a nanofiber layer and retrieve the base,
wherein the base supply device supplies a release paper,
the static eliminator electrically neutralizes the supplied release paper,
the base conveying device conveys the release paper,
the spinning device ejects a solution onto the conveyed release paper, and
the base retrieval device retrieves the release paper separated from the formed nanofiber layer.

3. The filter manufacturing apparatus of claim 2, further comprising:
a protective member stacking device configured to supply a protective member that covers a surface of the nanofiber layer,
wherein the protective member stacking device is disposed downstream of the spinning device in a conveying direction of the release paper.

4. The filter manufacturing apparatus of claim 3, further comprising:
a protective member bonding device configured to bond the protective member and the nanofiber layer to each other,
wherein the protective member bonding device is disposed upstream of the base retrieval device in the conveying direction of the release paper.

5. The filter manufacturing apparatus of claim 4, wherein the protective member bonding device comprises:
a plurality of presses that are arranged in a grid-point pattern and apply pressure to a surface of the protective member.

6. The filter manufacturing apparatus of claim 2, further comprising:
a support stacking device configured to supply a support that covers a back surface of the nanofiber layer,
wherein the support stacking device is disposed downstream of the base retrieval device in a conveying direction of the release paper.

7. The filter manufacturing apparatus of claim 6, further comprising:
a support bonding device configured to bond the support and the nanofiber layer to each other,
wherein the support bonding device is disposed downstream of the support stacking device in the conveying direction of the release paper.

8. The filter manufacturing apparatus of claim 1, further comprising:
a drying device configured to dry the base on which a nanofiber layer is formed,
wherein the drying device is disposed downstream of the spinning device in a conveying direction of the base.

9. The filter manufacturing apparatus of claim 6, further comprising:
a drying device configured to dry the nanofiber fabric,
wherein the drying device is disposed downstream of the support stacking device in the conveying direction of the release paper.

10. A filter manufacturing method comprising:
conveying a base on which nanofibers are deposited;
neutralizing the conveyed base electrically; and
spinning a solution onto the neutralized base.

11. The filter manufacturing method of claim 10, wherein in the conveying of the base, a release paper on which the nanofibers are deposited is conveyed,
in the neutralizing of the base, the conveyed release paper is electrically neutralized, and
in the spinning, the solution is spun onto the neutralized release paper.

12. The filter manufacturing method of claim 11, further comprising:
stacking a protective member that covers a surface of a nanofiber layer,
wherein the stacking of the protective member is performed after the spinning.

13. The filter manufacturing method of claim 11, further comprising:
removing the release paper that supports a nanofiber layer after the nanofiber layer is formed,
wherein the removing of the release paper is performed after stacking a protective member.

14. The filter manufacturing method of claim 13, further comprising:
bonding the protective member to the nanofiber layer.

15. The filter manufacturing method of claim 14, wherein the bonding of the protective member is performed before the removing of the release paper.

16. The filter manufacturing method of claim 13, further comprising:
stacking a support that covers a back surface of the nanofiber layer after the removing of the release paper.

17. The filter manufacturing method of claim 16, further comprising:
bonding the support and the nanofiber layer to each other.

18. The filter manufacturing method of claim 14, further comprising:
drying a nanofiber fabric, in which the nanofiber layer and the protective member are bonded to each other, after the bonding of the protective member.
